# EUROPEAN PATENT SPECIFICATION

(11) **EP 1 147 508 B1**
(45) Date of publication and mention of the grant of the patent: **16.10.2002**
(21) Application number: 00907067.3
(22) Date of filing: 28.01.2000
(51) Int. Cl.: G09G 1/16

(54) **AUTOMATIC GRAPHICS ADAPTATION TO VIDEO MODE FOR HDTV**
AUTOMATISCHE GRAFIKANPASSUNG AN DEN VIDEOMODUS FÜR HDTV
ADAPTATION DE GRAPHISMES AUTOMATIQUES AU MODE VIDEO HDTV

(30) Priority: 29.01.1999 US 240413
(43) Date of publication of application: 24.10.2001
(73) Proprietor: Sony Electronics Inc., Park Ridge, NJ 07656-8003 (US)
(72) Inventor: BROTZ, Mario, Udo, Mountain View, CA 94041 (US); WANG, David S., Fremont, CA 94538 (US); HSU, Pochen, Robert, San Jose, CA 95118 (US)
(74) Representative: Pratt, Richard Wilson
(86) International application number: US0002216
(87) International publication number: WO00045362

(56) References cited:
- EP-A- 0 573 280
- EP-A- 0 596 687
- US-A- 5 179 639

## Description

### FIELD OF THE INVENTION

This invention relates to a television receiver and more particularly to a television receiver having dual display modes.

### BACKGROUND OF THE INVENTION

High-definition television (HDTV) represents the next generation in video broadcast technology. HDTV provides significant improvement in picture clarity and quality by increasing the number of scanning lines from 525 (the US production standard for over 40 years) to approximately 1000 lines. In addition, HDTV improves on regular television with greatly enhanced color and digital stereo sound.

Much of the interest in HDTV applications has centered on potential uses in the television, motion picture, and consumer electronics industries. In addition to entertainment, other applications for HDTV include defense applications, medicine, and more. For instance, HDTV can provide instant, high-resolution images for air reconnaissance, enabling the military to replace 35 millimeter air reconnaissance cameras with HDTV video cameras, thus eliminating the time lag involved in film processing and the related logistics problems. HDTV can meet the requirements for high-resolution systems for map development, storage, access and editing. In the medical field, HDTV can provide instantaneous pictures of tissue slides, trauma patients, and surgical procedures, as it is ideally suited for recording the events and providing subsequent review.

The use of HDTV requires compatibility with existing formats in order to provide maximum flexibility. The enormous amount of video source material in Standard-definition television (SDTV) format will result in digital television broadcasts being transmitted in different video modes (e.g. HDTV and SDTV). Superimposing a graphical image upon an HDTV video image or an SDTV video image would traditionally require a separate graphical image for each video format, otherwise significant distortion of the graphical image size will occur when video formats are switched.

Accordingly, there is a need to provide automatic rendering of graphics in different video modes without the necessity for maintaining multiple graphic images (one for each video mode).

### SUMMARY OF THE INVENTION

A system and related methodology is disclosed for combining a single format bit mapped graphic image of standard resolution automatically with different digital video modes. Depending upon the particular digital video mode, the overlaid bit mapped graphic image is remapped to minimize distortion.

In one embodiment, the method includes the steps of: determining a current display mode of the HDTV monitor; remapping the bit mapped graphical image from a 1x1 pixel to a corresponding 2x2 set of DTV pixels when said current display mode is an HDTV mode; remapping the bit mapped graphical image from a pixel to a corresponding DTV pixel when said current display is in a SDTV mode; and superimposing the remapped bit mapped graphical image on to the current display mode.

### BRIEF DESCRIPTION OF THE DRAWINGS

A more complete understanding of the present invention may be obtained from consideration of the following description in conjunction with the drawings in which:
FIG. 1 is a functional block diagram of a digital television receiver transmitter-receiver pair for a single digital television program;
FIG. 2 is a functional block diagram of a DTV reception system;
FIG. 3a and 3b are representations of video in the HDTV mode and video in the SDTV mode;
FIG. 4 is a detail of the pixels of a portion on an HDTV mode display and an SDTV mode display; and,
FIG. 5 is a block diagram of a graphics and video filtering and blending system.

### DETAILED DESCRIPTION OF VARIOUS ILLUSTRATIVE EMBODIMENTS

Although the present invention is particularly well suited for digital broadcast HDTV and SDTV television receivers and shall be so described, the present invention is equally well suited for use with other multi-mode HDTV applications.

The Advanced Television Systems Committee (ATSC) Digital Television Standard (DTS) describes a system designed to transmit high quality video, high quality audio and ancillary data over a single 6 MHz channel. A DTS Digital Television system (DTV) can deliver reliably about 19 Mbps of throughput in a 6 MHz terrestrial broadcasting channel and about 38 Mbps of throughput in a 6 MHz cable television channel. To transport such a video whose resolution can be as high as five times that of conventional television (NTSC) resolution via these channels requires a bit rate reduction by a factor of 50 or higher. To achieve this bit rate reduction, DTV is designed to be efficient in utilizing available channel capacity by exploiting complex video and audio compression technology. An objective is to maximize the information passed through the data channel by minimizing the amount of data required to represent the video image sequence and its associated audio. A further objective is to represent the video, audio, and data sources with as few bits as possible while preserving the level of quality required for the given application. Although the RF/Transmission subsystems described in ATSC DTS are designed specifically for terrestrial and cable applications, the video, audio, and service multiplex/transport subsystems can be useful in other applications. DTV can be seen to consist of three subsystems: source coding and compression; service multiplex and transport; and RF/Transmission.

Source coding and compression refers to the bit rate reduction methods (data compression) appropriate for application to the video, audio, and ancillary digital data streams. Ancillary data includes control data, conditional access control data, and data associated with the program audio and video services, such as closed captioning. Ancillary data can also refer to independent program services. The purpose of the coder is to minimize the number of bits needed to represent the audio and video information. DTV employs the MPEG-2 video stream syntax for the coding of video and the Digital Audio Compression (AC-3) Standard for the coding of audio.

Service multiplex and transport refers to the means of dividing the digital data stream into "packets" of information, the means of uniquely identifying each packet or packet type, and the appropriate methods of multiplexing video data stream packets, audio data stream packets, and ancillary data stream packets into a single data stream. In developing the transport mechanism, interoperability among digital media, such as terrestrial broadcasting, cable distribution, satellite distribution, recording media, and computer interfaces, was a prime consideration. DTV employs the MPEG-2 transport stream syntax for the packetization and multiplexing of video, audio, and data signals for digital broadcasting systems. The MPEG-2 transport stream syntax was developed for applications where channel bandwidth or recording media capacity is limited and the requirement for an efficient transport mechanism is paramount. It was designed also to facilitate interoperability with the ATM transport mechanism.

RF/Transmission refers to channel coding and modulation. The channel coder takes the data bit stream and adds additional information that can be used by the receiver to reconstruct the data from the received signal which, due to transmission impairments, may not accurately represent the transmitted signal. The modulation (or physical layer) uses the digital data stream information to modulate the transmitted signal. The modulation subsystem offers two modes: a terrestrial broadcast mode (8 VSB), and a high data rate mode (16 VSB).

The bit rate required to represent an HDTV signal in uncompressed digital form is about 1 Gbps, but the bit rate that can reliably be transmitted within a standard 6 MHz television channel is about 20 Mbps. This implies a need for about a 50:1 or greater compression ratio. The compression algorithms selected for DTS conform to the specifications of MPEG-2, which is a flexible internationally accepted collection of compression techniques.

The MPEG-2 specification is organized into a system of profiles and levels, so that applications can ensure interoperability by using equipment and processing that adhere to a common set of coding tools and parameters. DTS is based on the MPEG-2 Main Profile. The Main Profile includes three types of frames for prediction (I-frames, P-frames, and B-frames), and an organization of luminance and chrominance samples (designated 4:2:0) within the frame. The Main Profile does not include a scaleable algorithm, where scalability implies that a subset of the compressed data can be decoded without decoding the entire data stream. The High Level includes formats with up to 1152 active lines and up to 1920 samples per active line, and for the Main Profile is limited to a compressed data rate of no more than 80 Mbps. The parameters specified by the DTS represent specific choices within these constraints.

The video compression system does not include algorithmic elements that fall outside the specifications for MPEG-2 Main Profile. Thus video decoders which conform to the MPEG-2 Main Profile can be expected to decode bit streams produced in accordance with the DTS. Note that it is not necessarily the case that all video decoders which are based on the DTS will be able to properly decode all video bit streams which comply to MPEG-2 Main Profile.

The image sequences that constitute a DTS source signal can vary in spatial resolution (480 lines, 720 lines, or 1080 lines), in temporal resolution (60 fps, 30 fps, or 24 fps), and in scanning format (2:1 interlaced or progressive scan). The video compression system accommodates the differences in source material to maximize the efficiency of compression.

The audio system of the DTS is based on the Digital Audio Compression (AC-3) Standard, with some limitations on bit rate, sampling rate, and audio coding mode. An audio program source is encoded by a digital television audio encoder. The output of the audio encoder is a string of bits that represent the audio source, and is referred to as an audio elementary stream. The transport subsystem packetizes the audio data into PES packets which are then further packetized into transport packets. The transmission subsystem converts the transport packets into a modulated RF signal for transmission to the receiver. At the receiver, the received signal is demodulated by the receiver transmission subsystem. The receiver transport subsystem converts the received audio packets back into an audio elementary stream which is decoded by the DTV audio decoder.

The audio system accepts base-band audio inputs with up to six audio channels per audio program bit stream. The six audio channels are: Left, Center, Right, Left Surround, Right Surround, and Low Frequency Enhancement (LFE). Multiple audio elementary bit streams may be conveyed by the transport system. The bandwidth of the LFE channel is limited to 120 Hz. The bandwidth of the other (main) channels is limited to 20 kHz. Low frequency response may extend to DC, but is more typically limited to approximately 3 Hz (-3 dB) by a DC blocking high-pass filter. Audio coding efficiency (and thus audio quality) is improved by removing DC offset from audio signals before they are encoded.

The system conveys digital audio sampled at a frequency of 48 kHz, locked to the 27 MHz system clock. If analog signal inputs are employed, the A/D converters should sample at 48 kHz. If digital inputs are employed, the input sampling rate shall be 48 kHz, or the audio encoder shall contain sampling rate converters which convert the sampling rate to 48 kHz. The sampling rate at the input to the audio encoder must be locked to the video clock for proper operation of the audio subsystem. In general, input signals should be quantized to at least 16-bit resolution. The audio compression system can convey audio signals with up to 24-bit resolution.

DTS affords the opportunity to augment the basic television video and audio service with ancillary digital data services. The flexibility of the MPEG-2 transport layer employed in the system allows new digital services to be easily introduced at any time in a completely backward-compatible manner. The transport system standard is based on MPEG-2. It employs the fixed-length transport stream packetization approach defined by MPEG. This approach to the transport layer is well suited to the needs of terrestrial broadcast and cable television transmission of digital television. The use of moderately long, fixed-length packets matches well with the needs and techniques for error protection in both terrestrial broadcast and cable television distribution environments. At the same time it provides great flexibility to accommodate the initial needs of the service to multiplex video, audio, and data while providing a well-defined path to add additional services in the future in a fully backward-compatible manner. By basing the transport layer on MPEG-2, maximum interoperability with other media and standards is maintained.

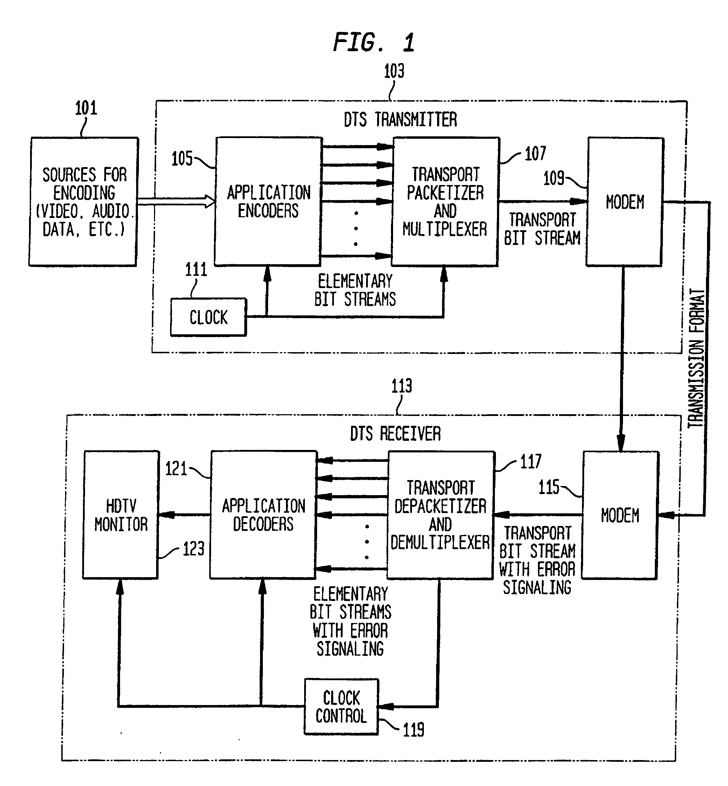

Referring to FIG. 1 there is shown a DTV transmitter-receiver pair for a single digital television program. Sources for encoding 101 can be video, audio, data, etc. The sources for encoding 101 are coupled to a DTV Transmitter 103. The DTV Transmitter 103 includes application encoders 105, clock source 111, a transport packetization and multiplexer 107 and a modem 109. The application encoders 105 produce elementary bit streams. The elementary bit streams are coupled to the transport packetizer and multiplexer 107 which produces a transport bit stream. The modem 109 converts the transport bit stream to an analog signal for transmission. As would be understood, the transmission format can be over the air RF, coax cable as well as fiber optical cable. A DTV Receiver 113 is adapted to receive the transmission format. The DTV Receiver includes a modem 115, a transport depacketizer and demultiplexer 117, a control clock 119, application decoders 121 and an HDTV monitor 123. The modem 115 is operable to convert the received analog signal to a transport bit stream with error signaling. The transport depacketizer and demultiplexer 117 convert the transport bit stream to elementary bit streams with error signaling. The application decoders 121 convert the elementary bit streams for presentation on the HDTV monitor 123.

In the DTV transmitter 103, the elementary bit streams created by the application encoders 107 (video, audio and ancillary data encoders) are packetized by the transport packetizer and multiplexer 107. These packets are then sent to the modem 109 (transmission subsystem) through one shared channel using time multiplex. The DTV receiver 113 transport system, transport depacketizer and demultiplexer 117 receives all correctly transmitted (not damaged during transmission) packets from the DTV receiver modem 115 (transmission system). The transport depacketizer and demultiplexer's 117 role is to demultiplex these packets into video packets, audio packets and other services packets, then to depacketize these queues back into elementary bit streams. Detected errors are signalized in these bit streams.

As previously noted, the DTV Standard is syntactically identical with MPEG-2 transport stream definition. It has also a high degree of interoperability with the ATM systems. Furthermore, as several of the cable television and Direct Broadcast Satellite (DBS) systems employ MPEG-2, the degree of interoperability with these should be very high.

Vestigial sideband (VSB) system which is a part of the DTS offers two modes: a simulcast terrestrial broadcast mode, and a high data rate mode. The two modes share the same pilot, symbol rate, data frame structure, interleaving, Reed-Solomon coding, and synchronization pulses. The terrestrial broadcast mode is optimized for maximum service area, and supports one ATV signal in a 6 MHz channel. The high data rate mode, which trades off some robustness for twice the data rate, supports two ATV signals in one 6 MHz channel. Both modes of the VSB transmission subsystem take advantage of a pilot, a segment sync, and a training sequence for robust acquisition and operation. The two system modes also share identical carrier, sync, and clock recovery circuits, as well as phase correctors and equalizers. Additionally, both modes use the same Reed-Solomon (RS) code for forward error correction (FEC). In order to maximize service area, the terrestrial broadcast mode incorporates both an NTSC rejection filter (in the receiver) and trellis coding. Pre-coding at the transmitter is incorporated in the trellis code. When the NTSC rejection filter is activated in the receiver, the trellis decoder is switched to a trellis code corresponding to the encoder trellis code concatenated with the filter. The high data rate mode, on the other hand, does not have as severe an environment to work in as that of the terrestrial system. Therefore, a higher data rate is transmitted in the form of more data levels (bits/symbol). No trellis coding or NTSC interference rejection filters are employed. VSB transmission inherently requires only processing the in-phase (I) channel signal, sampled at the symbol rate, thus optimizing the receiver for low cost implementation. The decoder only requires one A/D converter and a real (not complex) equalizer operating at the symbol rate of 10.76 Msamples/s.

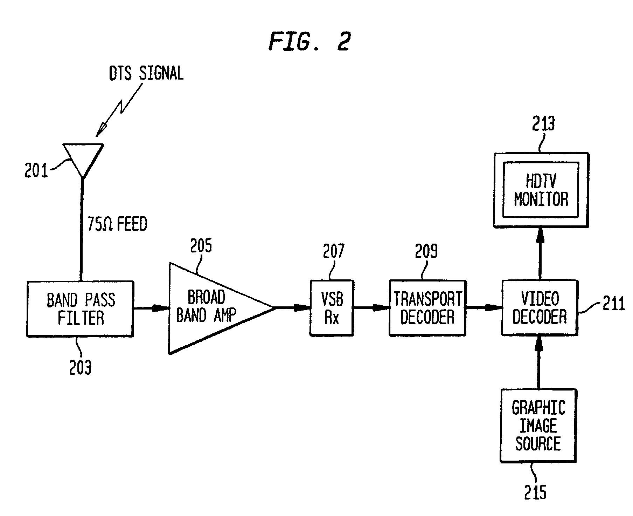

Referring to FIG. 2 there is shown a functional block diagram of a DTV reception system in accordance with the present invention. An antenna 201, typically with a 75 ohm output feed, receives DTV signals. The source of the signals can also be cable, including fiber optical as well as RF to an antenna 201. The 75 ohm output feed is coupled to an optional Band Pass Filter (BPF) 203. Where amplifiers are overloaded due to strong interferors, BPF 203 is placed before the first pre-amplifier to remove some of the offending interferors. The output of the optional BPF 203 is coupled to a Broadband Amplifier 205. While a single stage Broadband Amplifier 205 is shown, a two stage Broadband Amplifier can be used. Where a two stage Broadband Amplifier is utilized, the optional BPF 203 can be placed between the first and second preamplifiers. The output of the Broadband Amplifier 205 is coupled to a Vestigial Sideband Receiver (VSB Rx) 207. The VSB Rx 207 contains a VSB demodulator that can tune in the desired channel as required. The output of the VSB Rx 207 is coupled to a transport decoder 209. The output of the transport decoder 209 is coupled to a video decoder 211. The interface for the digital audio and the corresponding AC-3 audio decoder are not shown. The video decoder 211 is capable of driving an HDTV monitor 213 and is coupled thereto. A graphic image source 215 provides a bit mapped graphical image which will be combined with (overlaid on) the selected DTV video image. The graphic image source 215 can be another DTV signal such as an SDTV application, an external source, a computer generated source, as well as other sources. In an alternative embodiment, the output of video decoder 211 can be overlaid (multiplexed) by a graphics processor, which could then be connected to a 4:3 SDTV or a 16:9 HDTV set, as selected by the user, such as with an external switch.

On an HDTV/SDTV dual mode system, if it is assumed that a bit mapped graphic is developed for accurate reproduction in an SDTV mode with an aspect ratio of 4 by 3, when the video mode is changed to HDTV, the bit mapped graphic image would shrink and distort. Essentially, by remapping the bit mapped graphic image such that a 1 x 1 bit mapped graphic image designed for the SDTV mode would cover a 2 x 2 pixel area, the image would appear to remain constant, even as the video mode changes. This would allow a user to change digital video channels while the graphic image would remain relatively constant.

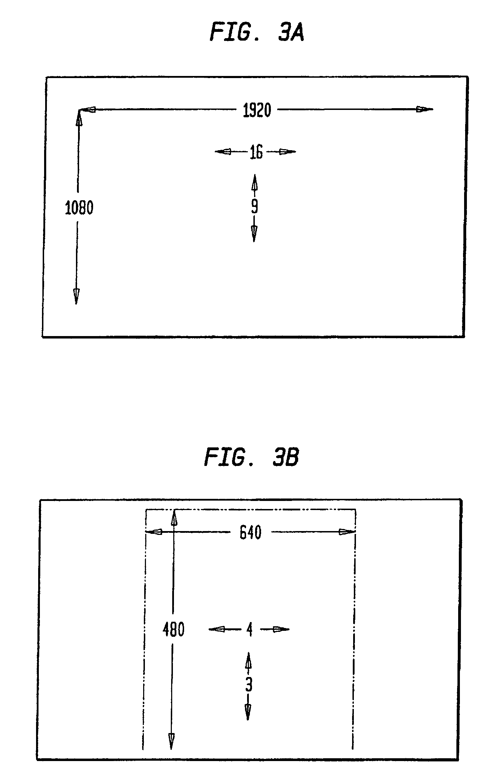

Referring to FIGs. 3a and 3b there are shown corresponding representations of video in the HDTV mode and video in the SDTV mode, each of which can be displayed utilizing the present invention. The HDTV mode has an aspect ratio of 16 by 9 with a resolution of 1920 horizontal pixels and 1080 vertical pixels. The SDTV mode has an aspect ratio of 4 by 3 with a resolution of 640 horizontal pixels and 480 vertical pixels. While there are 18 different video modes specified by ATSC, in one embodiment of the present invention, all video modes are scaled to either a resolution of 1920 horizontal pixels and 1080 vertical pixels or a resolution of 640 horizontal pixels and 480 vertical pixels.

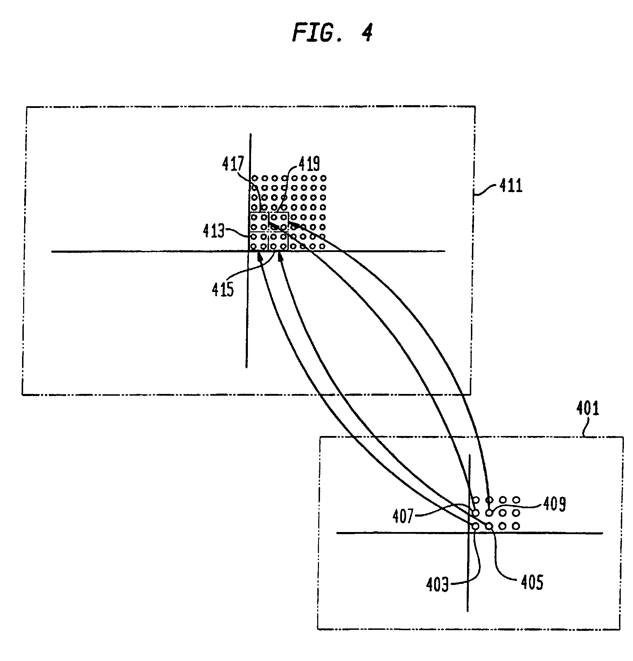

Referring to FIG. 4 a detail of a portion of the pixels on an HDTV mode display and an SDTV mode display can be seen. In the SDTV mode display 401, a bit mapped graphic image is superimposed on the SDTV image. The bit map graphic image is represented by pixels 403, 405, 407 and 409. In the HDTV mode display 411, the bit mapped graphic image is superimposed on the HDTV image. The SDTV pixels 403, 405, 407 and 409 are remapped to pixels 413, 415, 417 and 419 which are 2x2 sets of pixels. In particular, pixel 403 is remapped to each of the pixels 413, pixel 405 is remapped to each of the pixels 415, pixel 407 is remapped to each of the pixels 417 and pixel 409 is remapped to each of the pixels 419. Although the source pixels and the remapped area are shown as a rectangle, they may represent any shape, as there is a simple 1 to 2x2 correspondence between the remapping. This permits the same complex bit mapped graphical images which are representative of shapes, figures and other objects to be overlaid in either the HDTV video mode or the SDTV video mode. The remapping can be done as a simple replacement of the underlying video mode data, thus superimposing the bit mapped video graphics on the HDTV or SDTV image.

The remapping does not require any scaling and thus will not introduce the errors and problems associated with scaling. If the bit mapped graphics image is assumed to be square in the HDTV mode then it can be seen that there will be a slight vertical elongation in the SDTV mode. If the bit mapped graphics image is selected to be geometrically correct (in this example square) in between the HDTV and SDTV modes, the elongation distortion is further minimized.

Where the graphic image source 215 provides a bit mapped graphical image which was intended to be a computer displayed graphic image, it has to undergo a series of processing and conversion steps before display on the DTV. Computer graphics are usually represented in the red-green-blue (RGB) component format, while a television composite video signal is represented in the luma-chroma (Y/C) format. The combination of luma and chroma into one signal from these two sources can cause cross interference. The interference on luma appears as crawling patterns near the edges of an image. The interference on chroma appears as pulsating color patterns near edges with strong constrasts. Television programs are filtered during production to reduce or eliminate these visual artifacts.

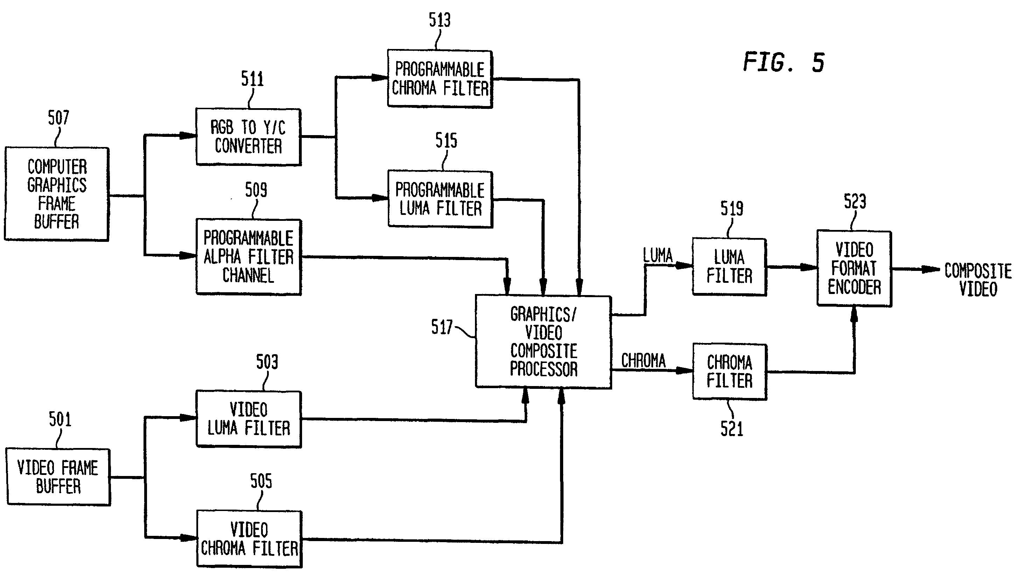

Computer graphics should be filtered before conversion to a composite video format. Referring to FIG. 5 there is shown a graphics and video filtering and blending system. A video frame buffer 501 is coupled to a video luma filter 503 and a video chroma filter 505 to provide separate video luma and video chroma signals. A computer graphics frame buffer 507 is coupled to a programmable alpha filter channel 509 and a RGB to Y/C converter 511. The Y/C signal from the converter 511 is coupled to a programmable chroma filter 513 and a programmable luma filter 515 to provide separate video chroma and video luma signals. Filter programmability is desirable as it allows a system to optimize for a particular configuration and content. The output signals of the video luma filter 503, video chroma filter 505, programmable alpha filter channel 509, programmable chroma filter 513 and programmable luma filter 515 are coupled to a graphics/video composite processor 517. The graphics/video composite processor 517 combines the video frame and the graphics frame into a single luma signal and a single chroma signal with the alpha channel signal controlling the interaction between the video and graphics planes. The alpha value of a pixel is the opacity of the pixel. The resulting combined luma signal and combined chroma signal is processed by a luma filter 519 and a chroma filter 521 respectively. Video format encoder 523 combines the output of the luma filter 519 and the output of the chroma filter 521 to form a composite video signal. Alternatively, a user can select the output mode which provides YUV with H and V sync. The YUV output can be connected to many 16:9 television sets, which enables the user to watch high resolution TV.

The graphics/video composite processor 517 remaps the graphics as necessary, in response to the video mode (HDTV or SDTV) of the video frame. After remapping, the alpha value of the graphic pixel is used to combine the two planes resulting in a single image presented to the user, which retains the size and shape of the graphic image in either video mode (HDTV or SDTV).

The present invention Automatic Graphics Adaptation to Video Mode for HDTV provides support for multiple video modes with different aspect ratios from one set of bit mapped graphics, permitting the bit mapped graphics to retain size and shape irrespective of aspect ratio. The bit mapped graphic image can be selected for undistorted representation in the HDTV mode, SDTV mode as well as for NTSC streaming video and other formats. When the system operates in SDTV mode there would be a direct 1 to 1 bit mapping. Again as mode changes to HDTV the mapping would be expanded for 1 bit to 2 x 2 bits.

Numerous modifications and alternative embodiments of the invention will be apparent to those skilled in the art in view of the foregoing description. Accordingly, this description is to be construed as illustrative only and is for the purpose of teaching those skilled in the art the best mode of carrying out the invention. Details of the structure may be varied substantially without departing from all modifications which come within the scope of the appended claims.

## Claims

1. A method for superimposing a bit mapped graphical image of standard resolution for various DTV video modes in an HDTV monitor [213], said method comprising the steps of:
determining a current display mode of the HDTV monitor[213];
remapping the bit mapped graphical image from a 1x1 pixel [403] to a corresponding 2x2 set of DTV pixels [413] when said current display mode is an HDTV mode [411];
remapping the bit mapped graphical image from a pixel to a corresponding DTV pixel when said current display is in a SDTV mode [401]; and
superimposing the remapped bit mapped graphical image on to the current display mode.

2. The method as recited in claim 1 wherein said pixel is comprised of a luma component and a chroma component.

3. The method as recited in claim 1 wherein said DTV pixel is comprised of a luma component and a chroma component.

4. The method as recited in claim 1 further comprising converting the bit mapped graphical image from RGB format to luma and chroma format.

5. The method as recited in claim 1 further comprising the step of automatically selecting between direct mapping and remapping in response to a change in said current display mode.

6. The method as recited in claim 1 wherein said bit mapped graphical image is selected for undistorted representation in the SDTV mode [401].

7. The method as recited in claim 1 wherein said bit mapped graphical image is selected for undistorted representation in the HDTV mode [411].

8. The method as recited in claim 1 wherein said bit mapped graphical image is selected for undistorted representation in a video mode between the SDTV mode [401] and the HDTV mode [411].

9. A system for remapping a bit mapped graphical image of standard resolution betwen various DTV video modes in an HDTV monitor [213], the system comprising:
a detector for determining a current display mode of the HDTV monitor [213];
remapping means for selectively remapping the bit mapped graphical image from a 1x1 pixel [403] to a corresponding 2x2 set of DTV pixels [413] when said current display mode is an HDTV mode [411] and for selectively mapping the bit mapped graphical image from a pixel to a DTV pixel when said current display mode in a SDTV mode [401]; and
combining means [517] for superimposing the remapped bit mapped graphical image on to the current display mode.

10. The system as recited in claim 9 wherein said pixel is comprised of a luma component and a chroma component.

11. The system as recited in claim 9 wherein said DTV pixel is comprised of a luma component and a chroma component.

12. The system as recited in claim 9 further comprising a converter for converting the bit mapped graphical image from RGB format to luma and chroma format.

13. The system as recited in claim 9 further comprising means for automatically selecting between direct mapping and remapping in response to a change in said current display mode.

14. The system as recited in claim 9 wherein said bit mapped graphical image is selected for undistorted representation in the SDTV mode [401].

15. The system as recited in claim 9 wherein said bit mapped graphical image is selected for undistorted representation in the HDTV mode [411].

16. The system as recited in claim 9 wherein said bit mapped graphical image is selected for undistorted representation in a video mode between the SDTV mode [401] and the HDTV mode.

17. An integrated circuit for remapping a bit mapped graphical image of standard resolution between various DTV video modes in an HDTV monitor [213], the integrated circuit comprising:
a detector for determining a current display mode of the HDTV monitor [213];
remapping means for selectively remapping the bit mapped graphical image from a 1x1 pixel [403] to a corresponding 2x2 set of DTV pixels [413] when said current display mode is an HDTV mode [411] and for selectively mapping the bit mapped graphical image from a pixel to a DTV pixel when said current display mode in a SDTV mode [401]; and
combining means [517] for superimposing the remapped bit mapped graphical image on to the current display mode.

18. The integrated circuit as recited in claim 17 further comprising a converter for converting the bit mapped graphical image from RGB format to luma and chroma format.

## Patentansprüche

1. Verfahren zur Überlagerung eines einzelbitweisen grafischen Bildes mit Standardauflösung für verschiedene DTV-Videomoden bei einem HDTV-Monitor (213), wobei das Verfahren die Schritte aufweist:
Bestimmen eines laufenden Anzeigemodus des HDTV-Monitors (213),
Wiederabbilden des einzelbitweisen grafischen Bildes von einem 1 × 1-Pixel (403) in einen korrespondierenden 2 × 2-Satz aus DTV-Pixeln (413), wenn der laufende Anzeigesmodus ein HDTV-Modus (411) ist,
Wiederabbilden des einzelbitweisen grafischen Bildes von einem Pixel in ein korrespondierendes DTV-Pixel, wenn die laufende Anzeige in einem SDTV-Modus (401) ist, und
Überlagern des wiederabgebildeten einzelbitweisen grafischen Bildes dem laufenden Anzeigemodus.

2. Verfahren nach Anspruch 1, wobei das Pixel aus einer Lumakomponente und einer Chromakomponente besteht.

3. Verfahren nach Anspruch 1, wobei das DTV-Pixel aus einer Lumakomponente und einer Chromakomponente besteht.

4. Verfahren nach Anspruch 1, mit einer Umwandlung des einzelbitweisen grafischen Bildes von einem RGB-Format in ein Luma- und Chromaformat.

5. Verfahren nach Anspruch 1, mit dem Schritt eines automatischen Wählens zwischen einer direkten Abbildung und einer Wiederabbildung in Abhängigkeit von einer Änderung des laufenden Anzeigemodus.

6. Verfahren nach Anspruch 1, wobei das einzelbitweise grafische Bild zur unverzerrten Darstellung im SDTV-Modus (401) gewählt ist.

7. Verfahren nach Anspruch 1, wobei das einzelbitweise grafische Bild zur unverzerrten Darstellung im HDTV-Modus (411) gewählt ist.

8. Verfahren nach Anspruch 1, wobei das einzelbitweise grafische Bild zur unverzerrten Darstellung in einem Videomodus zwischen dem SDTV-Modus (401) und dem HDTV-Modus (411) gewählt ist.

9. System zur Wiederabbildung eines einzelbitweisen grafischen Bildes mit Standardauflösung zwischen verschiedenen DTV-Videomoden bei einem HDTV-Monitor (213), wobei das System aufweist:
einen Detektor zur Bestimmung eines laufenden Anzeigemodus des HDTV-Monitors (213),
eine Wiederabbildungseinrichtung zur wahlweisen Wiederabbildung des einzelbitweisen grafischen Bildes von einem 1 x 1-Pixel (403) in einen korrespondierenden 2 x 2-Satz aus DTV-Pixeln (413), wenn der laufende Anzeigemodus ein HDTV-Modus (411) ist, und zur wahlweisen Abbildung des einzelbitweisen grafischen Bildes von einem Pixel in ein DTV-Pixel, wenn der laufende Anzeigemodus ein SDTV-Modus (401) ist, und
eine Kombinationseinrichtung (517) zur Überlagerung des wiederabgebildeten einzelbitweisen grafischen Bildes dem laufenden Anzeigemodus.

10. System nach Anspruch 9, wobei das Pixel aus einer Lumakomponente und einer Chromakomponente besteht.

11. System nach Anspruch 9, wobei das DTV-Pixel aus einer Lumakomponente und einer Chromakomponente besteht.

12. System nach Anspruch 9, mit einem Konverter zur Umwandlung des einzelbitweisen grafischen Bildes vom RGB-Format in ein Luma- und Chromaformat.

13. System nach Anspruch 9, mit einer Einrichtung zum automatischen Wählen zwischen einer direkten Abbildung und einer Wiederabbildung in Abhängigkeit von einer Änderung des laufenden Anzeigemodus.

14. System nach Anspruch 9, wobei das einzelbitweise grafische Bild zur unverzerrten Darstellung im SDTV-Modus (401) gewählt ist.

15. System nach Anspruch 9, wobei das einzelbitweise grafische Bild zur unverzerrten Darstellung im HDTV-Modus (411) gewählt ist.

16. System nach Anspruch 9, wobei das einzelbitweise grafische Bild zur unverzerrten Darstellung in einem Videomodus zwischen dem SDTV-Modus (401) und dem HDTV-Modus gewählt ist.

17. Integrierte Schaltung zur Wiederabbildung eines einzelbitweisen grafischen Bildes mit Standardauflösung zwischen verschiedenen DTV-Videomoden bei einem HDTV-Monitor (213), wobei die integrierte Schaltung aufweist:
einen Detektor zur Bestimmung eines laufenden Anzeigemodus des HDTV-Monitors (213),
eine Wiederabbildungseinrichtung zur wahlweisen Wiederabbildung des einzelbitweisen grafischen Bildes von einem 1 × 1-Pixel (403) in einen korrespondierenden 2 × 2-Satz aus DTV-Pixeln (413), wenn der laufende Anzeigemodus ein HDTV-Modus (411) ist, und zur wahlweisen Abbildung des einzelbitweisen grafischen Bildes von einem Pixel in ein DTV-Pixel, wenn der laufende Anzeigemodus ein SDTV-Modus (401) ist, und
eine Kombinationseinrichtung (517) zur Überlagerung des wiederabgebildeten einzelbitweisen grafischen Bildes dem laufenden Anzeigemodus.

18. Integrierte Schaltung nach Anspruch 17, mit einem Konverter zur Umwandlung des einzelbitweisen grafischen Bildes von einem RGB-Format in ein Luma- und Chromaformat.

## Revendications

1. Procédé de superposition d'une image graphique adressable par bit de résolution normalisée pour différents modes vidéo TV dans un moniteur HDTV (213), ledit procédé comprenant les étapes consistant à :
déterminer un mode d'affichage courant du moniteur HDTV (213) ;
remapper l'image graphique adressable par bit de 1x1 élément d'image (403) en un ensemble correspondant 2x2 d'éléments d'image DTV (413) lorsque ledit mode d'affichage courant est un mode HDTV (411) ;
remapper l'image graphique adressable par bit à partir d'un élément d'image en un élément d'image DTV correspondant lorsque ledit affichage courant est un mode SDTV (401) ; et
superposer l'image graphique adressable par bit remappée sur le mode d'affichage courant.

2. Procédé selon la revendication 1, dans lequel ledit élément d'image est constitué d'une composante luma et d'une composante chroma.

3. Procédé selon la revendication 1, dans lequel ledit élément d'image DTV est constitué d'une composante luma et d'une composante chroma.

4. Procédé selon la revendication 1, comprenant en outre une conversion de l'image graphique adressable par bit du format RGB au format luma et chroma.

5. Procédé selon la revendication 1, comprenant en outre l'étape de sélection automatique entre le mappage direct et le remappage en réponse à un changement dudit mode d'affichage courant.

6. Procédé selon la revendication 1, dans lequel ladite image graphique adressable par bit est sélectionnée pour une représentation sans distorsion en mode SDTV (401).

7. Procédé selon la revendication 1, dans lequel ladite image graphique adressable par bit est sélectionnée en vue d'une représentation sans distorsion en mode HDTV (411).

8. Procédé selon la revendication 1, dans lequel ladite image graphique adressable par bit est sélectionnée en vue d'une représentation sans distorsion dans un mode vidéo entre le mode SDTV (401) et le mode HDTV (411).

9. Système afin de remapper une image graphique adressable par bit de résolution normalisée entre différents modes vidéo DTV dans un moniteur HDTV (213), système comprenant :
un détecteur afin de déterminer un mode d'affichage courant du moniteur HDTV (213) ;
des moyens afin de remapper sélectivement l'image graphique adressable par bit depuis un 1x1 élément d'image (403) en un ensemble 2x2 correspondant d'éléments d'image DTV (413) lorsque ledit mode d'affichage courant est un mode HDTV (411) et pour mapper sélectivement l'image graphique adressable par bit depuis un élément d'image en un élément d'image DTV lorsque ledit mode d'affichage courant est un mode SDTV (401) ; et
des moyens de combinaison (517) afin de superposer l'image graphique adressable par bit remappée sur le mode d'affichage courant.

10. Système selon la revendication 9, dans lequel ledit élément d'image est constitué d'une composante luma et d'une composante chroma.

11. Système selon la revendication 9, dans lequel ledit élément d'image DTV est constitué d'une composante luma et d'une composante chroma.

12. Système selon la revendication 9, comportant en outre un convertisseur afin de convertir l'image graphique adressable par bit d'un format RGB en un format luma et chroma.

13. Système selon la revendication 9, comprenant en outre des moyens de sélection automatique entre un mappage direct et un remappage en réponse à un changement dudit mode d'affichage courant.

14. Système selon la revendication 9, dans lequel ladite image graphique adressable par bit est sélectionnée en vue d'une représentation sans distorsion en mode SDTV (401).

15. Système selon la revendication 9, dans lequel ladite image graphique adressable par bit est sélectionnée en vue d'une représentation sans distorsion en mode HDTV (411).

16. Système selon la revendication 9, dans lequel ladite image graphique adressable par bit est sélectionnée en vue d'une représentation sans distorsion en un mode vidéo entre le mode SDTV (401) et le mode HDTV.

17. Circuit intégré afin de remapper une image graphique adressable par bit de résolution normalisée entre différentes modes vidéo DTV dans un moniteur HDTV (213), circuit intégré comprenant :
un détecteur afin de déterminer un mode d'affichage courant du moniteur HDTV (213) ;
des moyens de remappage afin de remapper sélectivement l'image graphique adressable par bit d'un 1x1 élément d'image (403) en un ensemble 2x2 correspondant d'éléments d'image DTV (413) lorsque ledit mode d'affichage courant est un mode HDTV (411) et pour sélectionner le mappage de l'image graphique adressable par bit depuis un élément d'image à un élément d'image DTV lorsque ledit mode d'affichage courant est un mode SDTV (401) ; et
des moyens de combinaison (517) afin de superposer l'image graphique adressable par bit remappée sur le mode d'affichage courant.

18. Circuit intégré selon la revendication 17, comprenant en outre un convertisseur pour convertir l'image graphique adressable par bit d'un format RGB en un format luma et chroma.
